# EUROPÄISCHE PATENTSCHRIFT

(11) **EP 3 668 751 B1**
(45) Veröffentlichungstag und Bekanntmachung des Hinweises auf die Patenterteilung: **10.08.2022**
(21) Anmeldenummer: 18738208.0
(22) Anmeldetag: 20.06.2018
(51) Int. Cl.: B60Q 1/12, B60Q 1/14, F21S 41/63, F21S 41/663, F21W 102/145, F21W 102/13, F21W 102/19, B60Q 1/076

(54) **SCHEINWERFER FÜR EIN FAHRZEUG**
HEADLIGHT FOR A VEHICLE
PHARE CONÇU POUR UN VÉHICULE

(30) Priorität: 17.08.2017 DE 102017214346
(43) Veröffentlichungstag der Anmeldung: 24.06.2020
(73) Patentinhaber: Volkswagen Aktiengesellschaft, 38440 Wolfsburg (DE)
(72) Erfinder: THIEL, Alexander, 38179 Schwülper (DE); OPASKA, Ines, 38364 Schöningen (DE); LOOSE, Christoph, 38106 Braunschweig (DE); THAMM, Mathias, 39646 Oebisfelde (DE)
(86) Internationale Anmeldenummer: PCT/EP2018/066488
(87) Internationale Veröffentlichungsnummer: WO 2019/034306

(56) Entgegenhaltungen:
- EP-A2- 2 357 398
- WO-A1-2015/022115
- CN-A- 104 373 895
- DE-A1-102012 103 313
- DE-A1-102014 112 931
- DE-B4- 10 262 294
- JP-A- 2016 039 021
- KR-A- 20130 032 686

## Beschreibung

Die Erfindung betrifft einen Scheinwerfer für ein Fahrzeug gemäß dem Oberbegriff des Patentanspruchs 1, ein Beleuchtungssystem gemäß dem Oberbegriff des Patentanspruchs 4 und ein Kraftfahrzeug gemäß dem Oberbegriff des Patentanspruchs 8.

Auf dem Gebiet von Fahrzeugen, beispielsweise Kraftfahrzeugen, kommt den Scheinwerfern besondere sicherheitstechnische Relevanz zu. Lichtfunktionen wie beispielsweise eine Grundlichtverteilung beziehungsweise Abblendlicht sowie Fernlicht müssen dabei hohe Anforderungen unter anderem hinsichtlich ihrer Hell-Dunkel-Grenze, des Ausleuchtungsbereichs, der Intensität und der Homogenität erfüllen.

Zunehmend kommen auch adaptive Lichtfunktionen zum Einsatz, wie beispielsweise ein adaptives Kurvenlicht. Konventionell werden hier im Ausleuchtungsbereich des beispielsweise Abblendlichts, beispielsweise im Falle einer Linkskurve, Bereiche am rechten Rand des Ausleuchtungsbereichs abgeschattet und am linken Rand Bereiche zusätzlich durch Aufhebung der Abschattung freigegeben. Somit verschiebt sich der Ausleuchtungsbereich im optischen Eindruck nach links. Beim Fernlicht ist es außerdem bekannt, einzelne Segmente des Ausleuchtungsbereichs abzuschatten beziehungsweise auszumaskieren, um beispielsweise ein im Ausleuchtungsbereich befindliches Objekt, wie ein anderes Fahrzeug, nicht zu beeinträchtigen.

Als nachteilig an bekannten Scheinwerfern erweist sich aber, dass deren Aufbau recht komplex ist und die Homogenität der Lichtfunktionen von inneren Bereichen des Ausleuchtungsbereichs hin zu äußeren Bereichen, die durch das gezielte Abschatten sichtbar beziehungsweise nicht sichtbar gemacht werden, abnimmt.

Die DE 10 2013 216 318 A1 beschreibt beispielsweise ein Verfahren und eine Vorrichtung für ein Kraftfahrzeug, mit denen eine Lichtfunktion bestehend aus einer Überlagerung einer ersten und zweiten Teillichtverteilung erzeugbar ist. Die erste und zweite Teillichtverteilung werden dabei von ersten und zweiten Modulen, zum einen durch Verändern einer Position bewegbarer Elemente und zum anderen durch Ansteuern einzelner Lichtquellen, erzeugt.

Des Weiteren zeigt die US 2014/0175978 A1 einen Scheinwerfer für ein Kraftfahrzeug mit einer schwenkbaren LED-Matrix.

DE 10 2012 103 313 A1 offenbart ein Lichtmodul für den Scheinwerfer eines Fahrzeuges. Das Lichtmodul weist eine Basislichtquelle zur Erzeugung einer Basislichtfunktion und wenigstens eine Zusatzlichtquelle zur Erzeugung einer Zusatzlichtfunktion auf. Es ist eine Schwenkvorrichtung vorgesehen, welche zum Verschwenken der Basislichtfunktion und der Zusatzlichtfunktion ausgebildet ist.

DE 102 62 294 B4 offenbart einen Scheinwerfer, der selber oder bei dem Teile des Scheinwerfers kadanisch gelagert sind, indem diese um eine horizontale Achse und eine vertikale Achse verschwenkbar sind. Die Achsen schneiden sich in einem Punkt, der mit einem Schwerpunkt der zu verschwenkenden Teile zusammenfällt.

Der Erfindung liegt nun die Aufgabe zugrunde, einen Scheinwerfer für ein Fahrzeug zu schaffen, der eine geringe konstruktive Komplexität und eine verbesserte Homogenität der Lichtfunktionen aufweist.

Die Aufgabe wird durch die Gegenstände der Ansprüche 1, 4 und 8 gelöst. Weitere bevorzugte Ausgestaltungen der Erfindung ergeben sich aus den übrigen, in den Unteransprüchen genannten Merkmalen.

Ein erster Aspekt der Erfindung betrifft einen Scheinwerfer für ein Fahrzeug, umfassend wenigstens ein Gehäuse, eine Lichtscheibe und ein Lichtmodul, das in dem Gehäuse um eine vertikale Achse schwenkbar gelagert ist. Erfindungsgemäß ist vorgesehen, dass das Lichtmodul zumindest eine Leuchtmittelmatrix mit mehreren individuell ansteuerbaren Leuchtmitteln umfasst, wobei zur Erzeugung eines segmentweise aktivierbaren Fernlichts jedem der Leuchtmittel wenigstens ein lichtbrechendes Element zugeordnet ist und dass das Lichtmodul außerdem wenigstens ein weiteres Leuchtmittel umfasst, dem zur Erzeugung einer Grundlichtverteilung wenigstens ein weiteres lichtbrechendes Element zugeordnet ist.

Mit anderen Worten ausgedrückt sind bei dem Scheinwerfer Leuchtmittel für ein Fernlicht in Form einer Leuchtmittelmatrix und Leuchtmittel für eine Grundlichtverteilung, die vorzugsweise ein Abblendlicht umfasst, in einem einzigen Lichtmodul zusammengefasst und in der horizontalen Ebene schwenkbar gelagert. Die Leuchtmittel können beispielsweise LEDs sein. Als lichtbrechende Elemente kommen beispielsweise Kollimationslinsen in Betracht. Das wenigstens eine lichtbrechende Element für das Fernlicht und das wenigstens eine weitere lichtbrechende Element für die Grundlichtverteilung können auch als ein Bauteil ausgebildet sein, welches dann Teilbereiche umfasst, die den jeweils spezifischen optischen Anforderungen Rechnung tragen.

Dadurch, dass das Lichtmodul mit Abblendlicht und Fernlicht schwenkbar ist, ist ein gewissermaßen simuliertes Schwenken beziehungsweise Verschieben des jeweiligen Ausleuchtungsbereichs, wie im Stand der Technik beispielsweise durch Abschattung beim Abblendlicht oder Aktivierung und Deaktivierung bestimmter Segmente im Randbereich des Ausleuchtungsbereichs des Fernlichts, nicht mehr erforderlich. Dies führt beim Scheinwerfer der Erfindung zu einer deutlichen Verbesserung der Homogenität des jeweiligen Ausleuchtungsbereichs, da beispielsweise in einer Kurvenfahrt die Ausleuchtungsbereiche beider Lichtfunktionen derart mechanisch mit dem gesamten Lichtmodul schwenkbar sind, dass der vor dem Fahrzeug liegende Kurvenabschnitt optimal erfasst wird. Zudem kann durch Ausmaskierung bestimmte Abschnitte des Fernlichts beziehungsweise Deaktivieren der entsprechenden Leuchtmittel ein vorausfahrendes Fahrzeug, das sich auch bereits in der Kurve befinden kann, aus dem Ausleuchtungsbereich des Fernlichts ausgenommen werden. Weiterhin vorteilhaft ist es, dass bei dem erfindungsgemäßen Scheinwerfer lediglich das Lichtmodul mechanisch geschwenkt wird. Die bewegte Masse und somit das Massenträgheitsmoment sind hier sehr gering. Dies führt zu einer verbesserten motorischen Ansteuerbarkeit der Schwenkbewegung und zu einer besseren Schwingungsresistenz, was gerade bei Beleuchtungsvorrichtungen wichtig ist, da sich Schwingungen des Lichtmoduls mit zunehmender Entfernung vom Fahrzeug deutlich sichtbar auswirken. Auch werden bei dem erfindungsgemäßen Scheinwerfer die Anzahl an Einzelteilen und die Kosten gegenüber bekannten Lösungen reduziert. Insbesondere ist hier lediglich ein einziges Lichtmodul erforderlich.

Erfindungsgemäß ist vorgesehen, dass der Schwenkrahmen gegenüber dem Gehäuse translatorisch in vertikaler und horizontaler Richtung verstellbar gelagert ist und das Lichtmodul gegenüber dem Schwenkrahmen schwenkbar gelagert ist.

Erfindungsgemäß ist weiter vorgesehen, dass das Lichtmodul gegenüber dem Schwenkrahmen schwenkbar gelagert ist, indem das Lichtmodul an der vertikalen Achse aufgehangen ist, die von dem Schwenkrahmen getragen wird und durch den Massenschwerpunkt des Lichtmoduls verläuft. Beispielsweise kann ein Schwenkrahmen in Portalbauweise vorgesehen sein, in dessen inneren Bereich das Lichtmodul in etwa mittig aufgehangen ist. Die vertikale Achse kann beispielsweise von einer oberen und unteren Querstrebe des Schwenkrahmens getragen werden und dort drehbar gelagert sein. All dies führt zu einer großen Steifigkeit der mechanischen Konstruktion, die aufgrund der Schwerpunktsaufhängung ohne äußere Einwirkungen unbelastet ist.

Hier wirken sich mechanische Toleranzen wegen der kürzeren kinematischen Kette weniger auf die Position und Orientierung des Lichtmoduls aus, was vorteilhaft für die Lichtfunktionen ist. Das Lichtmodul ist an dem mechanischen Schwenkrahmen gelagert. Ein Schwenkrahmen kann beispielsweise in Portalbauweise oder auch in C-Bauweise ausgebildet sein und das Lichtmodul ganz oder teilweise umgeben. All dies führt zu einer verbesserten Steifigkeit der Lagerung des Lichtmoduls. Ferner schützt der Schwenkrahmen das Lichtmodul, wenn dieses in ihm angeordnet ist. Insbesondere in der Montage des Scheinwerfers bietet dies große Vorteile und erleichtert auch die Handhabung, wenn Schwenkrahmen und Lichtmodul beispielsweise vormontiert und zwischengelagert werden. Hier bietet der Schwenkrahmen auch Ansatzpunkte für eine Aufnahmevorrichtung während der Zwischenlagerung, ohne dass das empfindliche Lichtmodul berührt werden muss.

In bevorzugter Ausgestaltung des Scheinwerfers der Erfindung ist vorgesehen, dass wenigstens ein lichtbrechendes Element des Lichtmoduls in wenigstens einem Freiheitsgrad motorisch justierbar ist. Beispielsweise können die Kollimationslinsen für Fernlicht oder auch Abblendlicht zur Feinabstimmung des Ausleuchtungsbereichs in ihrer Position oder auch Orientierung verstellt werden. Motorisch ist dies besonders genau möglich.

In weiterer bevorzugter Ausgestaltung des Scheinwerfers der Erfindung ist vorgesehen, dass zum Schwenken des Lichtmoduls ein elektrischer Antrieb vorgesehen ist, der an einer Basiskonstruktion des Schwenkrahmens angeordnet ist. Die Basiskonstruktion kann beispielsweise eine mit dem Schweinwerfer verbundene Grundplatte sein, mit der der Schwenkrahmen drehbar gelagert verbunden ist. Die Anordnung des elektrischen Antriebs an der Basiskonstruktion führt dazu, dass dieser nicht mitgeschwenkt wird, was vorteilhaft für die Massenträgheit der geschwenkten Bereiche ist. Die Antriebsenergie kann beispielsweise über eine Spindel auf den geschwenkten Teil, beispielsweise das Portal, des Schwenkrahmens übertragen werden.

Ein zweiter Aspekt der Erfindung betrifft ein Beleuchtungssystem, umfassend wenigstens einen erfindungsgemäßen Scheinwerfer gemäß der vorherigen Beschreibung sowie wenigstens eine Steuerungseinrichtung, über die zumindest ein Lichtmodul des Scheinwerfers ansteuerbar ist und zumindest ein elektrischer Antrieb des Scheinwerfers ansteuerbar ist. Beispielsweise sind mehrere individuell ansteuerbare Leuchtmittel des Lichtmoduls ansteuerbar, wodurch eine Erzeugung eines segmentweise aktivierbaren Fernlichts möglich ist. Ferner ist beispielsweise wenigstens ein weiteres Leuchtmittel des Lichtmoduls ansteuerbar, wodurch eine Grundlichtverteilung realisierbar ist. Beispielsweise kann der elektrische Antrieb zur Schwenkung des Lichtmoduls angesteuert werden.

In bevorzugter Ausgestaltung des Beleuchtungssystems der Erfindung ist vorgesehen, dass die Steuerungseinrichtung das Lichtmodul in Abhängigkeit eines Schwenkwinkels des Lichtmoduls anzusteuern vermag. Beispielsweise kann ein Bereich des Fernlichts, der eine Gegenfahrbahn betrifft und auf gerader Strecke ausmaskiert ist, in einer Kurvenfahrt in Abhängigkeit der Schwenkung des Lichtmoduls ebenfalls im Bereich der Gegenfahrbahn ausmaskiert werden. Da die Steuerungseinrichtung vorzugsweise auch den elektrischen Antrieb zur Verschwenkung des Lichtmoduls ansteuert, können die Informationen über den eingestellten Schwenkwinkel einfach mitverwendet werden. All dies erhöht die Sicherheit des Beleuchtungssystems signifikant.

In weiter bevorzugter Ausgestaltung des Beleuchtungssystems der Erfindung ist vorgesehen, dass die Steuerungseinrichtung in Abhängigkeit des Schwenkwinkels wenigstens eines der individuell ansteuerbaren Leuchtmittel der Leuchtmittelmatrix aktiviert oder deaktiviert. Auf diese Weise ist es möglich, einen Beleuchtungsbereich des Scheinwerfers an die Verschwenkung anzupassen. Vorzugsweise werden einzelne der individuell ansteuerbaren Leuchtmittel gezielt deaktiviert, um einzelne Bereiche vor dem Fahrzeug gezielt auszumaskieren, was die Sicherheit des Beleuchtungssystems sehr erhöht.

In weiter bevorzugter Ausgestaltung des Beleuchtungssystems der Erfindung ist vorgesehen, dass ein Sensor, beispielsweise umfassend eine Kamera, Radar oder Infrarotsensor, zur Erfassung eines im Beleuchtungsbereich des Scheinwerfers befindlichen Objekts vorgesehen ist und zur Ausmaskierung dieses Objekts entsprechende Leuchtmittel der Leuchtmittelmatrix deaktivierbar sind. Das Objekt kann beispielsweise ein vorausfahrendes oder entgegenkommendes Fahrzeug sein. Besonders vorteilhaft kann dies auch in Abhängigkeit vom Schwenkwinkel des Lichtmoduls erfolgen, um so beispielsweise ein in einer Kurvenfahrt vorausfahrendes Fahrzeug auszumaskieren. Der Sensor kann auch ein internetbasiertes Ortungssystem umfassen, welches den Standort des vorausfahrenden Fahrzeugs abruft.

Ein dritter Aspekt der Erfindung betrifft ein Kraftfahrzeug mit einem erfindungsgemäßen Scheinwerfer gemäß der vorherigen Beschreibung und/oder einem erfindungsgemäßen Beleuchtungssystem gemäß der vorherigen Beschreibung.

Zusammenfassend lässt sich mit anderen Worten nochmals sagen, dass die Erfindung einen Scheinwerfer betrifft sowie ein Beleuchtungssystem und ein Kraftfahrzeug mit dem Scheinwerfer, wobei der Scheinwerfer eine Fernlichtmatrix und ein Abblendlicht in einem gemeinsamen schwenkbaren Lichtmodul vereint.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen schematischen Aufbau eines erfindungsgemäßen Scheinwerfers;
- Figur 2: eine schematische Darstellung von mit dem erfindungsgemäßen Scheinwerfer realisierbarer Lichtfunktionen; und
- Figur 3: ein erfindungsgemäßes Kraftfahrzeug mit einem erfindungsgemäßen Scheinwerfer.

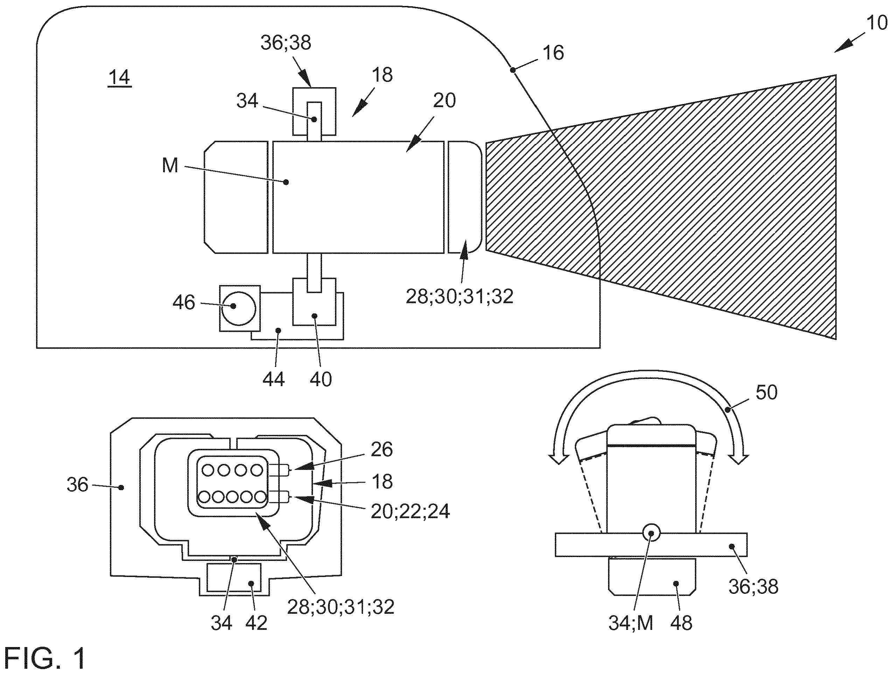

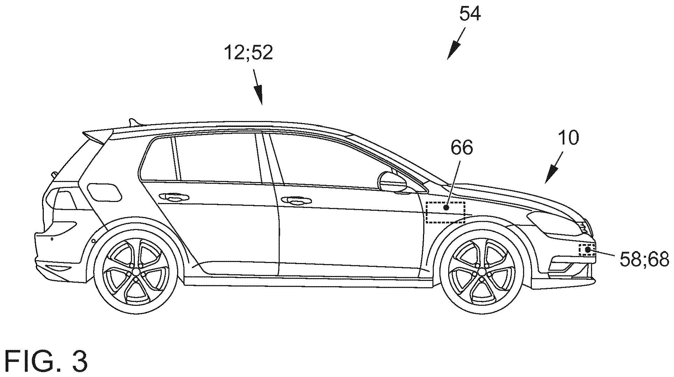

Figur 1 zeigt schematisch den Aufbau eines erfindungsgemäßen Scheinwerfers 10 für ein Fahrzeug 12 (vergleiche Figur 3). Lediglich angedeutet ist hier ein Gehäuse 14 des Scheinwerfers 10, das im vorderen Bereich mit einer Lichtscheibe 16 abgeschlossen ist. In dem Gehäuse 14 ist ein Lichtmodul 18 angeordnet. Das Lichtmodul 18 umfasst eine Leuchtmittelmatrix 20. Im unteren Teil von Figur 1 links ist angedeutet, dass die Leuchtmittelmatrix 20 mehrere individuell ansteuerbare Leuchtmittel 22 umfasst. Die individuell ansteuerbaren Leuchtmittel 22 sind in dem vorliegenden Beispiel Leuchtdioden 24. Erkennbar ist, dass das Lichtmodul 18 im unteren Bereich eine Zeile mit den Leuchtdioden 24 umfasst. Oberhalb der Leuchtmittelmatrix 20 sind weitere Leuchtmittel 26 angeordnet. Diese bilden eine weitere Zeile oberhalb der Leuchtmittelmatrix 20. Die Leuchtmittelmatrix 20 dient der Erzeugung eines segmentweise aktivierbaren Fernlichts 60. Zu diesem Zweck ist jedem der Leuchtmittel 22 beziehungsweise den Leuchtdioden 24 wenigstens ein lichtbrechendes Element 28, beispielsweise Kollimationslinsen für ein Fernlicht 31, zugeordnet. Die lichtbrechenden Elemente 28 sind vorliegend vereinfacht dargestellt. Des Weiteren ist zur Erzeugung einer Grundlichtverteilung 56, vorliegend eines Abblendlichts, den weiteren Leuchtmitteln 26 wenigstens ein weiteres lichtbrechendes Element 30, beispielsweise eine Kollimationslinse für ein Abblendlicht 32, zugeordnet, welches ebenfalls nur vereinfacht dargestellt ist.

Im oberen Teil der Figur 1, in welcher der Scheinwerfer 10 schematisch von der Seite her gezeigt ist, ist erkennbar, dass das Lichtmodul 18 in dem Gehäuse 14 um eine vertikale Achse 34 schwenkbar gelagert ist. Insbesondere in Figur 1 unten links und rechts ist gezeigt, dass die Lagerung des Lichtmoduls 18 an einen mechanischen Schwenkrahmen 36 realisiert ist. Der Schwenkrahmen 36 ist vorliegend in Portalbauweise ausgeführt und nimmt die vertikale Achse 34 in etwa mittig auf. Die vertikale Achse 34 ist an einer oberen und unteren Querstrebe 38, 40 drehbar gelagert. In dem gezeigten Beispiel des Scheinwerfers 10 ist der Schwenkrahmen 36 gegenüber dem Gehäuse 14 über eine nicht weiter dargestellte Mechanik translatorisch in vertikaler und horizontaler Richtung verstellbar gelagert, um eine Grundjustage bei der Montage zu ermöglichen. Das Lichtmodul 18 ist gegenüber dem Schwenkrahmen 36 über die vertikale Achse 34 schwenkbar gelagert. Lagerungspunkte der vertikalen Achse 34 befinden sich dabei jeweils in der oberen Querstrebe 38 und der unteren Querstrebe 40 des Schwenkrahmens 36. In Figur 1 unten links ist gezeigt, dass unterhalb der vertikalen Achse 34 ein Getriebe 42 in dem Schwenkrahmen 36 angeordnet ist. Ferner ist in Figur 1 oben gezeigt, dass an einer Basiskonstruktion 44 des Schwenkrahmens 36 ein elektrischer Antrieb 46 vorgesehen ist. Der elektrische Antrieb 46 vermag seine Antriebsleistung über das Getriebe 42 und eine nicht dargestellte Spindel auf die vertikale Achse 34 zur Verschwenkung des Lichtmoduls 18 zu übertragen. Die vertikale Achse 34 verläuft dabei durch den Massenschwerpunkt M des Lichtmoduls 18. Bei der Bestimmung des Massenschwerpunktes ist zu berücksichtigen, dass das Lichtmodul 18 gegebenenfalls weitere Anbaukomponenten umfasst, wie beispielsweise einen Kühlkörper 48. In Figur 1 unten rechts ist zur Veranschaulichung nochmals ein Schwenkbereich 50 des Lichtmoduls 18 gezeigt.

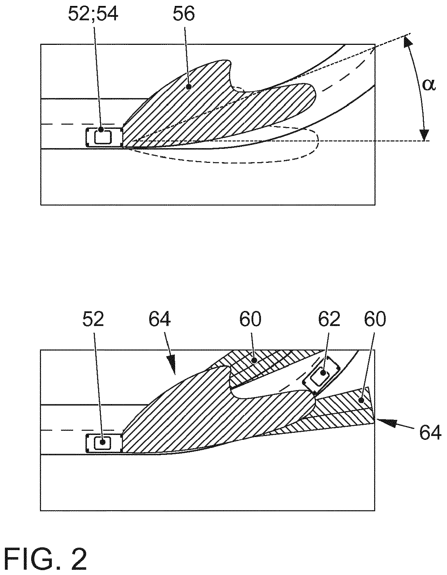

Figur 2 zeigt schematisch anhand eines erfindungsgemäßen Kraftfahrzeugs 52, das mit einem erfindungsgemäßen Beleuchtungssystem 54 ausgestattet ist, welches insbesondere den erfindungsgemäßen Scheinwerfer 10 aus Figur 1 enthält, wie unterschiedliche Lichtfunktionen realisierbar sind. Figur 2 oben zeigt beispielsweise, wie mit dem Scheinwerfer 10 eine Grundlichtverteilung 56 in Form eines Abblendlichts erzeugt wird. In diesem Fall ist gezeigt, wie das Lichtmodul 18 um die vertikale Achse 34 um einen Schwenkwinkel α verschwenkt ist. In der Folge wird ein Ausleuchtungsbereich der Grundlichtverteilung 56 entsprechend verschwenkt. Figur 2 unten zeigt, wie zusätzlich zu dem in Figur 2 oben gezeigten Fall das segmentweise aktivierbare Fernlicht 60 aktiviert ist. Vor dem Kraftfahrzeug 52, welches sich unmittelbar vor Einfahrt in eine Kurve befindet, findet sich vorausfahrend bereits in der Kurve ein weiteres Fahrzeug 62. Auch in der in Figur 2 unten gezeigten Situation ist das segmentweise aktivierbare Fernlicht 60 des Kraftfahrzeugs 52 mit dem Lichtmodul 18 um die vertikale Achse 34 und um den Winkel α verschwenkt. Dabei wird mit einem nicht dargestellten Sensor 58, hier einer Kamera 68 (vergleiche Figur 3), das weitere Fahrzeug 62, welches sich im Beleuchtungsbereich 64 des Scheinwerfers 10 befindet, erfasst. Daraufhin werden entsprechende Leuchtmittel 22 der Leuchtmittelmatrix 20 deaktiviert, so dass das weitere Fahrzeug 62 ausmaskiert ist beziehungsweise sich nicht mehr im Beleuchtungsbereich 64 befindet. Zu diesem Zweck wertet das Beleuchtungssystem 54 den Schwenkwinkel α sowie die von der Kamera 68 erfasste Position des weiteren Fahrzeugs 62 aus und berechnet so, welche Leuchtmittel 22 der Leuchtmittelmatrix 20 zu deaktivieren sind.

Figur 3 zeigt das erfindungsgemäße Kraftfahrzeug 52, das mit dem erfindungsgemäßen Beleuchtungssystem 54 ausgestattet ist. Im vorderen Teil des Kraftfahrzeugs 52 ist der erfindungsgemäße Scheinwerfer 10 angeordnet. Das Beleuchtungssystem 54 umfasst wenigstens eine Steuerungseinrichtung 66. Die Steuerungseinrichtung 66 vermag das in dem Scheinwerfer 10 verbaute Lichtmodul 18 anzusteuern. Ferner vermag die Steuerungseinrichtung 66 den elektrischen Antrieb 46 des Scheinwerfers 10 anzusteuern. Hierdurch wird die Verschwenkung des Lichtmoduls 18 bewirkt. Die Steuerungseinrichtung 66 kann auch an oder in dem Gehäuse 14 des Scheinwerfers 10 integriert sein. Die Steuerungseinrichtung 66 generiert auch die Steuerungsgrößen zur Aktivierung beziehungsweise Deaktivierung der Leuchtmittel 22, 26 des Lichtmoduls 18 und berücksichtigt dabei gegebenenfalls den Schwenkwinkel a. Zu diesem Zweck vermag die Steuerungseinrichtung 66 auch Kameradaten der Kamera 68, mit der das Kraftfahrzeug 52 ausgestattet ist, zu verarbeiten. Vorzugsweise erhält die Steuerungseinrichtung 66 die Kameradaten in Form von Koordinaten, beispielsweise Koordinaten des weiteren Fahrzeugs 62. Zur Ableitung der Koordinaten kann beispielsweise ein bereits vorhandener Bordcomputer des Kraftfahrzeugs 52 Roh-Kameradaten der Kamera 68 vorverarbeiten. Mit der Kamera 68 sind auf diese Weise auch andere im Beleuchtungsbereich 64 des Scheinwerfers 10 befindliche Objekte erfassbar.

### Bezugszeichenliste

- 10: Scheinwerfer
- 12: Fahrzeug
- 14: Gehäuse
- 16: Lichtscheibe
- 18: Lichtmodul
- 20: Leuchtmittelmatrix
- 22: individuell ansteuerbare Leuchtmittel
- 24: Leuchtdioden (LEDs)
- 26: weiteres Leuchtmittel
- 28: lichtbrechendes Element
- 30: weiteres lichtbrechendes Element
- 31: Kollimationslinsen für ein Fernlicht
- 32: Kollimationslinse für ein Abblendlicht
- 34: vertikale Achse
- 36: Schwenkrahmen
- 38: obere Querstrebe
- 40: untere Querstrebe
- 42: Getriebe
- 44: Basiskonstruktion
- 46: elektrischer Antrieb
- 48: Kühlkörper
- 50: Schwenkbereich
- 52: Kraftfahrzeug
- 54: Beleuchtungssystem
- 56: Grundlichtverteilung
- 58: Sensor
- 60: Fernlicht
- 62: weiteres Fahrzeug
- 64: Beleuchtungsbereich
- 66: Steuerungseinrichtung
- 68: Kamera

- M: Massenschwerpunkt
- α: Schwenkwinkel

## Patentansprüche

1. Scheinwerfer (10) für ein Fahrzeug (12), umfassend wenigstens:
- ein Gehäuse (14);
- eine Lichtscheibe (16); und
- ein Lichtmodul (18), das in dem Gehäuse (14) um eine vertikale Achse (34) schwenkbar gelagert ist,
wobei das Lichtmodul (18) zumindest eine Leuchtmittelmatrix (20) mit mehreren individuell ansteuerbaren Leuchtmitteln (22) umfasst, wobei zur Erzeugung eines segmentweise aktivierbaren Fernlichts (60) jedem der Leuchtmittel (22) wenigstens ein lichtbrechendes Element (28, 31) zugeordnet ist und das Lichtmodul (18) außerdem wenigstens ein weiteres Leuchtmittel (26) umfasst, dem zur Erzeugung einer Grundlichtverteilung (56) wenigstens ein weiteres lichtbrechendes Element (30, 32) zugeordnet ist und das Lichtmodul (18) an einem mechanischen Schwenkrahmen (36) gelagert ist,
**dadurch gekennzeichnet, dass**
der Schwenkrahmen (36) gegenüber dem Gehäuse (14) translatorisch in vertikaler und horizontaler Richtung verstellbar gelagert ist und das Lichtmodul (18) gegenüber dem Schwenkrahmen (36) schwenkbar gelagert ist, indem das Lichtmodul (18) an der vertikalen Achse (34) aufgehangen ist, die von dem Schwenkrahmen (36) getragen wird und durch den Massenschwerpunkt (M) des Lichtmoduls (18) verläuft.

2. Scheinwerfer (10) nach Anspruch 1, **dadurch gekennzeichnet, dass** wenigstens ein lichtbrechendes Element (28, 30, 31, 32) des Lichtmoduls (18) in wenigstens einem Freiheitsgrad motorisch justierbar ist.

3. Scheinwerfer (10) nach einem der vorhergehenden Ansprüche, **dadurch gekennzeichnet, dass** zum Schwenken des Lichtmoduls (18) ein elektrischer Antrieb (46) vorgesehen ist, der an einer Basiskonstruktion (44) des Schwenkrahmens (18) angeordnet ist.

4. Beleuchtungssystem (54), umfassend wenigstens einen Scheinwerfer (10) nach einem der vorhergehenden Ansprüche sowie wenigstens eine Steuerungseinrichtung (66), über die zumindest ein Lichtmodul (18) des Scheinwerfers (10) ansteuerbar ist und zumindest ein elektrischer Antrieb (46) des Scheinwerfers (10) ansteuerbar ist.

5. Beleuchtungssystem (54) nach Anspruch 4, **dadurch gekennzeichnet, dass** die Steuerungseinrichtung (66) das Lichtmodul (18) in Abhängigkeit eines Schwenkwinkels (a) des Lichtmoduls (18) anzusteuern vermag.

6. Beleuchtungssystem (54) nach Anspruch 5, **dadurch gekennzeichnet, dass** die Steuerungseinrichtung (66) in Abhängigkeit des Schwenkwinkels (a) wenigstens eines der individuell ansteuerbaren Leuchtmittel (22) der Leuchtmittelmatrix (20) aktiviert oder deaktiviert.

7. Beleuchtungssystem (54) nach einem der Ansprüche 4 bis 6, **dadurch gekennzeichnet, dass** ein Sensor (58, 68) zur Erfassung eines im Beleuchtungsbereich (64) des Scheinwerfers (10) befindlichen Objekts (62) vorgesehen ist und zur Ausmaskierung dieses Objekts (62) entsprechende Leuchtmittel (22) der Leuchtmittelmatrix (20) deaktivierbar sind.

8. Kraftfahrzeug (52) mit einem Scheinwerfer (10) nach einem der Ansprüche 1 bis 3 und/oder einem Beleuchtungssystem (54) nach einem der Ansprüche 4 bis 7.

## Claims

1. Headlamp (10) for a vehicle (12), comprising at least:
- a housing (14);
- a lens (16); and
- a light module (18) pivotably mounted in the housing (14) about a vertical axis (34),
wherein the light module (18) comprises at least one light matrix (20) with several individually-controllable illuminants (22), wherein, for generating a high beam (60) that can be activated segment-by-segment, at least one refractive element (28, 31) is assigned to each of the illuminants (22), and the light module (18) also comprises at least one further illuminant (26), to which at least one further refractive element (30, 32) is assigned for generating a base-light distribution (56), and the light module (18) is mounted on a mechanical pivoting frame (36),
**characterized in that**
the pivoting frame (36) is mounted so as to be translationally adjustable in the vertical and horizontal directions with respect to the housing (14), and the light module (18) is pivotably mounted with respect to the pivoting frame (36) **in that** the light module (18) is suspended from the vertical axis (34) that is supported by the pivoting frame (36) and runs through the center of mass (M) of the light module (18).

2. Headlamp (10) according to claim 1, **characterized in that** at least one refractive element (28, 30, 31, 32) of the light module (18) can be adjusted in a motor-driven manner in at least one degree of freedom.

3. Headlamp (10) according to one of the preceding claims, **characterized in that** an electric drive (46) is provided for pivoting the light module (18) and is arranged on a base structure (44) of the pivoting frame (18).

4. Lighting system (54), comprising at least one headlamp (10) according to one of the preceding claims and at least one control device (66), via which at least one light module (18) of the headlamp (10) and at least one electric drive (46) of the headlamp (10) can be controlled.

5. Lighting system (54) according to claim 4, **characterized in that** the control device (66) can control the light module (18) as a function of a pivot angle (a) of the light module (18).

6. Lighting system (54) according to claim 5, **characterized in that** the control device (66) activates or deactivates at least one of the individually-controllable illuminants (22) of the light matrix (20) as a function of the pivot angle (a).

7. Lighting system (54) according to one of claims 4 through 6, **characterized in that** a sensor (58, 68) for detecting an object (62) located in the lighting region (64) of the headlamp (10) is provided, and corresponding illuminants (22) of the light matrix (20) can be deactivated to mask out this object (62).

8. Motor vehicle (52) with a headlamp (10) according to one of claims 1 through 3 and/or a lighting system (54) according to one of claims 4 through 7.

## Revendications

1. Phare (10) conçu pour un véhicule (12), comprenant au moins :
- un boîtier (14) ;
- une glace de phare (16) ; et
- un module de lumière (18), qui est monté dans le boîtier (14) de manière pivotante autour d'un axe vertical (34),
le module de lumière (18) comprenant au moins une matrice de moyens d'éclairage (20) dotée de plusieurs moyens d'éclairage (22) pouvant être commandés individuellement, au moins un élément réfringent (28, 31) étant associé à chacun des moyens d'éclairage (22) pour générer un feu de route (60) activable par segments et le module de lumière (18) comprenant en outre au moins un autre moyen d'éclairage (26), auquel est associé au moins un autre élément réfringent (30, 32) pour générer une diffusion lumineuse de base (56) et le module de lumière (18) étant monté sur un cadre pivotant (36) mécanique,
**caractérisé en ce que**
le cadre pivotant (36) est monté réglable en translation dans la direction verticale et horizontale par rapport au boîtier (14) et le module de lumière (18) est monté pivotant par rapport au cadre pivotant (36) du fait que le module de lumière (18) est suspendu à l'axe vertical (34) qui est porté par le cadre pivotant (36) et s'étend à travers le centre de masse (M) du module de lumière (18).

2. Phare (10) selon la revendication 1, **caractérisé en ce qu'au** moins un élément réfringent (28, 30, 31, 32) du module de lumière (18) peut être ajusté de manière motorisée dans au moins un degré de liberté.

3. Phare (10) selon l'une quelconque des revendications précédentes, **caractérisé en ce qu'**un entraînement électrique (46) est prévu pour pivoter le module de lumière (18), ledit entraînement électrique étant disposé sur une construction de base (44) du cadre pivotant (18).

4. Système d'éclairage (54), comprenant au moins un phare (10) selon l'une quelconque des revendications précédentes, ainsi qu'au moins un dispositif de commande (66), par le biais duquel l'au moins un module de lumière (18) du phare (10) peut être commandé et au moins un entraînement électrique (46) du phare (10) peut être commandé.

5. Système d'éclairage (54) selon la revendication 4, **caractérisé en ce que** le dispositif de commande (66) est capable de commander le module de lumière (18) en fonction d'un angle de pivotement (a) du module de lumière (18).

6. Système d'éclairage (54) selon la revendication 5, **caractérisé en ce que** le dispositif de commande (66), en fonction de l'angle de pivotement (a), active ou désactive au moins un des moyens d'éclairage (22) pouvant être commandés individuellement de la matrice de moyens d'éclairage (20).

7. Système d'éclairage (54) selon l'une quelconque des revendications 4 à 6, **caractérisé en ce qu'**un capteur (58, 68) destiné à détecter un objet (62) se trouvant dans la zone d'éclairage (64) du phare (10) est prévu et des moyens d'éclairage (22) correspondants de la matrice de moyens d'éclairage (20) peuvent être désactivés pour masquer cet objet (62).

8. Véhicule automobile (52) comprenant un phare (10) selon l'une quelconque des revendications 1 à 3 et/ou un système d'éclairage (54) selon l'une quelconque des revendications 4 à 7.
